(19) Europäisches Patentamt
European Patent Office
Office européen des brevets

(11) EP 3 578 313 A1

(12) **EUROPÄISCHE PATENTANMELDUNG**

(43) Veröffentlichungstag:
11.12.2019 Patentblatt 2019/50

(51) Int Cl.:
*B25C 1/06* (2006.01)

(21) Anmeldenummer: 18176198.2

(22) Anmeldetag: 06.06.2018

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **HILTI Aktiengesellschaft**
**9494 Schaan (LI)**

(72) Erfinder:
• **Dittrich, Tilo**
  **6800 Feldkirch (AT)**
• **Bruggmueller, Peter**
  **6719 Bludesch (AT)**
• **Abu Antoun, Chafic**
  **9470 Buchs (CH)**

(74) Vertreter: **Hilti Aktiengesellschaft**
**Corporate Intellectual Property**
**Feldkircherstrasse 100**
**Postfach 333**
**9494 Schaan (LI)**

(54) **SETZGERÄT**

(57) Setzgerät 10 zum Eintreiben von Befestigungselementen 30 in einen Untergrund, insbesondere handgeführtes Setzgerät, aufweisend eine Aufnahme 20, welche dafür vorgesehen ist, ein Befestigungselement aufzunehmen, ein Eintreibelement 60, welches dafür vorgesehen ist, ein in der Aufnahme aufgenommenes Befestigungselement mit einer Setzenergie $E_{kin}$ entlang einer Setzachse A in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator 300, einen an dem Eintreibelement angeordneten Kurzschlussläufer 90 und eine Erregerspule 100 aufweist, welche bei einer Entladung des Kondensators mit Strom durchflossen wird und ein Magnetfeld erzeugt, welches das Eintreibelement auf das Befestigungselement zu beschleunigt, wobei eine Stromstärke $A_{Coil}$ des die Erregerspule durchfliessenden Stroms während der Entladung des Kondensators einen zeitlichen Verlauf mit einer ansteigenden Flanke, einer maximalen Stromstärke $A_{max}$ und einer abfallenden Flanke aufweist, wobei die Stromstärke $A_{Coil}$ während einer Stromanstiegsdauer $\Delta t_{rise}$ von dem 0,1-fachen bis zu dem 0,8-fachen der maximalen Stromstärke $A_{max}$ ansteigt und während einer Einwirkdauer $\Delta t_{impact}$ mehr als das 0,5-fache der maximalen Stromstärke $A_{max}$ beträgt, und wobei die Stromanstiegsdauer $\Delta t_{rise}$ mindestens 0,020 ms und höchstens 0,275 ms und/oder die Einwirkdauer $\Delta t_{impact}$ mindestens 0,15 ms und höchstens 2,0 ms beträgt.

Fig. 1

EP 3 578 313 A1

## Beschreibung

Die vorliegende Erfindung betrifft ein Setzgerät zum Eintreiben von Befestigungselementen in einen Untergrund.

Derartige Setzgeräte weisen üblicherweise eine Aufnahme für ein Befestigungselement auf, aus welcher heraus ein darin aufgenommenes Befestigungselement entlang einer Setzachse in den Untergrund befördert wird. Ein Eintreibelement wird hierfür von einem Antrieb entlang der Setzachse auf das Befestigungselement zu angetrieben.

Aus der US 6,830,173 B2 ist ein Setzgerät mit einem Antrieb für ein Eintreibelement bekannt. Der Antrieb weist einen elektrischen Kondensator und eine Spule auf. Zum Antreiben des Eintreibelements wird der Kondensator über die Spule entladen, wodurch eine Lorentz-Kraft auf das Eintreibelement wirkt, so dass das Eintreibelement auf einen Nagel zu bewegt wird.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem Setzgerät zum Eintreiben von Befestigungselementen in einen Untergrund, aufweisend eine Aufnahme, welche dafür vorgesehen ist, ein Befestigungselement aufzunehmen, ein Eintreibelement, welches dafür vorgesehen ist, ein in der Aufnahme aufgenommenes Befestigungselement mit einer Setzenergie $E_{kin}$ entlang einer Setzachse in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator, einen an dem Eintreibelement angeordneten Kurzschlussläufer und eine Erregerspule aufweist, welche bei einer Entladung des Kondensators mit Strom durchflossen wird und ein Magnetfeld erzeugt, welches das Eintreibelement auf das Befestigungselement zu beschleunigt, wobei eine Stromstärke $A_{Coil}$ des die Erregerspule durchfliessenden Stroms während der Entladung des Kondensators einen zeitlichen Verlauf mit einer ansteigenden Flanke, einer maximalen Stromstärke $A_{max}$ und einer abfallenden Flanke aufweist, wobei die Stromstärke $A_{Coil}$ während einer Stromanstiegsdauer $\Delta t_{rise}$ von dem 0,1-fachen bis zu dem 0,8-fachen der maximalen Stromstärke $A_{max}$ ansteigt und während einer Einwirkdauer $\Delta t_{impact}$ mehr als das 0,5-fache der maximalen Stromstärke $A_{max}$ beträgt, und wobei die Stromanstiegsdauer $\Delta t_{rise}$ mindestens 0,020 ms und höchstens 0,275 ms und/oder die Einwirkdauer $\Delta t_{impact}$ mindestens 0,15 ms und höchstens 2,0 ms beträgt. Das Setzgerät ist dabei bevorzugt handgeführt einsetzbar. Alternativ ist das Setzgerät stationär oder halbstationär einsetzbar.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Eine vorteilhafte Ausführungsform ist dadurch gekennzeichnet, dass die Stromanstiegsdauer $\Delta t_{rise}$ mindestens 0,05 ms und höchstens 0,2 ms beträgt. Eine weitere vorteilhafte Ausführungsform ist dadurch gekennzeichnet, dass die Einwirkdauer $\Delta t_{impact}$ mindestens 0,2 ms und höchstens 1,6 ms beträgt.

Eine vorteilhafte Ausführungsform ist dadurch gekennzeichnet, dass eine maximale Stromdichte in der Erregerspule während der Entladung des Kondensators mindestens 800 A/mm$^2$ und höchstens 3200 A/mm$^2$ beträgt.

Eine vorteilhafte Ausführungsform ist dadurch gekennzeichnet, dass der Kondensator und die Erregerspule in einem elektrischen Schwingkreis angeordnet sind, und wobei der Kondensator eine Kapazität $C_{Cap}$ sowie einen Kondensatorwiderstand $R_{Cap}$, die Erregerspule eine Eigeninduktivität $L_{Coil}$ sowie einen Spulenwiderstand $R_{Coil}$ und der elektrische Schwingkreis einen Gesamtwiderstand $R_{total}$ aufweist. Bevorzugt beträgt ein Verhältnis des Kondensatorwiderstands $R_{Cap}$ zu dem Gesamtwiderstand $R_{total}$ höchstens 0,6, besonders bevorzugt höchstens 0,5. Ebenfalls bevorzugt beträgt ein Verhältnis der Eigeninduktivität $L_{Coil}$ zu dem Spulenwiderstand $R_{Coil}$ mindestens 800 $\mu H/\Omega$ und höchstens 4800 $\mu H/\Omega$. Ebenfalls bevorzugt weist der Kondensator eine Kondensatorzeitkonstante $\tau_{Cap} = C_{Cap} R_{Cap}$ und die Erregerspule eine Spulenzeitkonstante $\tau_{Coil} = L_{Coil}/R_{Coil}$ auf, wobei ein Verhältnis der Spulenzeitkonstante $\tau_{Coil}$ zu der Kondensatorzeitkonstante $\tau_{Cap}$ mindestens 10 beträgt, das heisst dass die Spulenzeitkonstante $\tau_{Coil}$ mindestens das 10-fache der Kondensatorzeitkonstante $\tau_{Cap}$ beträgt.

Eine vorteilhafte Ausführungsform ist dadurch gekennzeichnet, dass das Eintreibelement dafür vorgesehen ist, ein in der Aufnahme aufgenommenes Befestigungselement mit einer Setzenergie $E_{kin}$ von mindestens 30 J und höchstens 600 J in den Untergrund zu befördern, wobei das Eintreibelement einen Kolbendurchmesser $d_K$ und eine Kolbenmasse $m_K$ aufweist, und wobei für den Kolbendurchmesser $d_K$

$$\frac{2}{3}(a + b\,E_{kin}^n) \leq d_K \leq \frac{4}{3}(a + b\,E_{kin}^n)$$

mit a = 33 mm, b = 6 mmJ$^{-n}$ sowie n = 1/3 und/oder für die Kolbenmasse $m_K$

$$\frac{2}{3}(c + d\,E_{kin}^n) \leq m_K \leq \frac{5}{3}(c + d\,E_{kin}^n)$$

mit c = 20 g, d = 30 gJ$^{-n}$ sowie n = 1/3 gilt. Unter dem Kolbendurchmesser $d_K$ im Sinne der Erfindung ist dabei die grösste Ausdehnung des Eintreibelements senkrecht zur Setzachse zu verstehen. Bei einem kreiszylindrischen Eintreibelement oder Kolbenteller ist dies der Zylinderdurchmesser.

In den Zeichnungen ist die Erfindung in mehreren Ausführungsbeispielen dargestellt.

Es zeigen:

Fig. 1 ein Setzgerät in einem Längsschnitt,
Fig. 2 eine Erregerspule in einem Längsschnitt,
Fig. 3 einen zeitlichen Verlauf einer Stromstärke,
Fig. 4 einen Wirkungsgrad in einer Abhängigkeit einer Kolbenmasse,
Fig. 5 einen Kolbendurchmesser in Abhängigkeit einer Setzenergie und
Fig. 6 eine Kolbenmasse in Abhängigkeit einer Setzenergie.

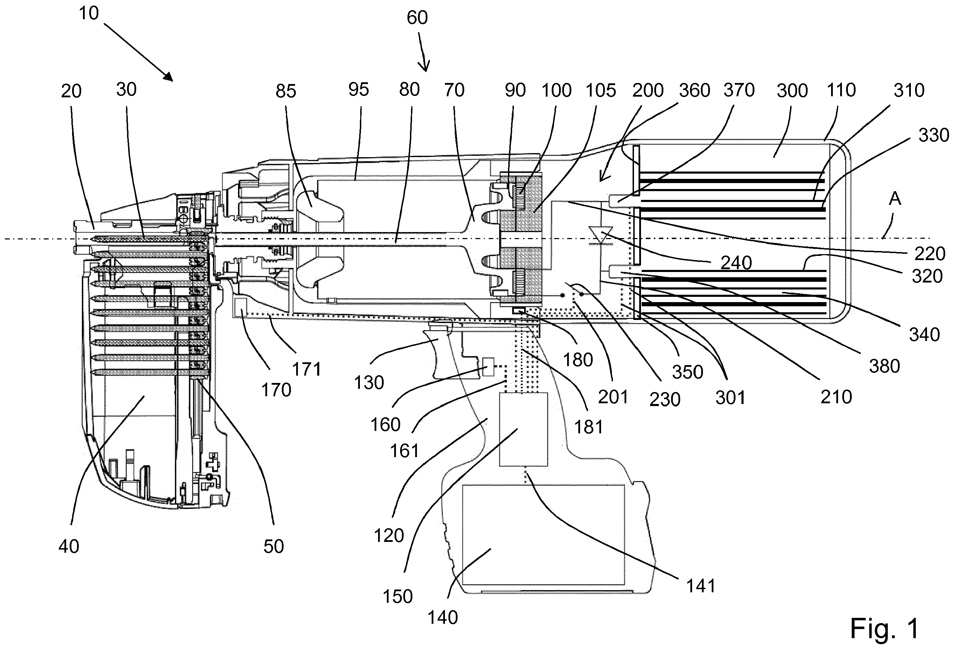

In Fig. 1 ist ein handgeführtes Setzgerät 10 zum Eintreiben von Befestigungselementen in einen nicht gezeigten Untergrund dargestellt. Das Setzgerät 10 weist eine als Bolzenführung ausgebildete Aufnahme 20 auf, in welcher ein als Nagel ausgebildetes Befestigungselement 30 aufgenommen ist, um entlang einer Setzachse A in den Untergrund eingetrieben zu werden (in Fig. 1 nach links). Für eine Zuführung von Befestigungselementen zu der Aufnahme umfasst das Setzgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf. Das Setzgerät 10 weist ein Eintreibelement 60 auf, welches einen Kolbenteller 70 und eine Kolbenstange 80 umfasst. Das Eintreibelement 60 ist dafür vorgesehen, das Befestigungselement 30 aus der Aufnahme 20 heraus entlang der Setzachse A in den Untergrund zu befördern. Hierbei ist das Eintreibelement 60 mit seinem Kolbenteller 70 in einem Führungszylinder 95 entlang der Setzachse A geführt.

Das Eintreibelement 60 wird seinerseits von einem Antrieb angetrieben, welcher einen an dem Kolbenteller 70 angeordneten Kurzschlussläufer 90, eine Erregerspule 100, einen weichmagnetischen Rahmen 105, einen Schaltkreislauf 200 und einen Kondensator 300 mit einem Innenwiderstand von 5 mOhm umfasst. Der Kurzschlussläufer 90 besteht aus einem bevorzugt ringförmigen, besonders bevorzugt kreisringförmigen Element mit einem geringen elektrischen Widerstand, beispielsweise aus Kupfer, und ist auf der von der Aufnahme 20 abgewandten Seite des Kolbentellers 70 an dem Kolbenteller 70 befestigt, beispielsweise verlötet, verschweisst, verklebt, geklemmt oder formschlüssig verbunden. Bei nicht gezeigten Ausführungsbeispielen ist der Kolbenteller selbst als Kurzschlussläufer ausgebildet. Der Schaltkreislauf 200 ist dafür vorgesehen, eine elektrische Schnellentladung des zuvor aufgeladenen Kondensators 300 herbeizuführen und den dabei fliessenden Entladestrom durch die Erregerspule 100 zu leiten, welche in dem Rahmen 105 eingebettet ist. Der Rahmen weist bevorzugt eine Sättigungsflussdichte von mindestens 1,0 T und/oder eine effektive spezifische elektrische Leitfähigkeit von höchstens 10$^6$ S/m auf, so dass ein von der Erregerspule 100 erzeugtes Magnetfeld von dem Rahmen 105 verstärkt und Wirbelströme in dem Rahmen 105 unterdrückt werden.

In einer setzbereiten Position des Eintreibelements 60 (Fig. 1) taucht das Eintreibelement 60 mit dem Kolbenteller 70 so in eine nicht näher bezeichnete ringförmige Vertiefung des Rahmens 105 ein, dass der Kurzschlussläufer 90 in geringem Abstand gegenüber der Erregerspule 100 angeordnet ist. Dadurch durchsetzt ein Erregermagnetfeld, welches durch eine Änderung eines durch die Erregerspule fliessenden elektrischen Erregerstroms erzeugt wird, den Kurzschlussläufer 90 und induziert in dem Kurzschlussläufer 90 seinerseits einen ringförmig umlaufenden elektrischen Sekundärstrom. Dieser sich aufbauende und damit sich ändernde Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche das Eintreibelement 60 auf die Aufnahme 20 sowie das darin aufgenommene Befestigungselement 30 zu antreibt.

Das Setzgerät 10 umfasst weiterhin ein Gehäuse 110, in welchem der Antrieb aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, ein als an dem Rahmen 105 angeordneter Temperatursensor 180 ausgebildetes Mittel zur Erfassung einer Temperatur der Erregerspule 100 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Setzgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Setzgerät 10 an einen nicht gezeigten Untergrund (in Fig. 1 links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und das Eintreibelement 60 in seiner in Fig. 1 dargestellten setzbereiten Position ist, befindet sich das Setzgerät 10 in einem setzbereiten Zustand. Dadurch, dass die Aufladung des Kondensators 300 erst durch das Anpressen des Setzgeräts 10 an den Untergrund bewirkt wird, ist zur Erhöhung der Sicherheit von umstehenden Personen ein Setzvorgang nur dann ermöglicht, wenn das Setzgerät 10 an den Untergrund angepresst ist. Bei nicht gezeigten Ausführungsbeispielen leitet die Steuereinheit den Kondensator-Aufladevorgang bereits bei einem Einschalten des Setzgeräts oder bei einem Abheben des Setzgeräts von dem Untergrund oder bei Beendigung eines vorausgegangenen Eintreibvorgangs ein.

Wenn bei setzbereitem Setzgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu der Erregerspule 100 geleitet wird, indem der Kondensator 300 entladen wird.

Der in Fig. 1 schematisch dargestellte Schaltkreislauf 200 umfasst hierzu zwei Entladeleitungen 210, 220, welche den Kondensator 300 mit der Erregerspule 200 verbinden und von denen zumindest eine Entladeleitung 210 von einem normalerweise geöffneten Entladeschalter 230 unterbrochen ist. Der Schaltkreislauf 200 bildet mit der Erregerspule 100 und dem Kondensator 300 einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch die Erregerspule 100 fliesst. Der schnell ansteigende Entladestrom induziert ein Erregermagnetfeld, welches den Kurzschlussläufer 90 durchsetzt und in dem Kurzschlussläufer 90 seinerseits einen ringförmig umlaufenden elektrischen Sekundärstrom induziert. Dieser sich aufbauende Sekundärstrom erzeugt wiederum ein Sekundärmagnetfeld, welches dem Erregermagnetfeld entgegengesetzt ist, wodurch der Kurzschlussläufer 90 eine von der Erregerspule 100 abstossende Lorentz-Kraft erfährt, welche das Eintreibelement 60 auf die Aufnahme 20 sowie das darin aufgenommene Befestigungselement 30 zu antreibt. Sobald die Kolbenstange 80 des Eintreibelements 60 auf einen nicht näher bezeichneten Kopf des Befestigungselements 30 trifft, wird das Befestigungselement 30 von dem Eintreibelement 60 in den Untergrund eingetrieben. Überschüssige Bewegungsenergie des Eintreibelements 60 wird von einem Bremselement 85 aus einem federelastischen und/oder dämpfenden Material, beispielsweise Gummi, aufgenommen, indem sich das Eintreibelement 60 mit dem Kolbenteller 70 gegen das Bremselement 85 bewegt und von diesem bis zu einem Stillstand abgebremst wird. Danach wird das Eintreibelement 60 von einer nicht näher bezeichneten Rückstellvorrichtung in die setzbereite Position zurückgestellt.

Der Kondensator 300, insbesondere sein Schwerpunkt, ist auf der Setzachse A hinter dem Eintreibelement 60 angeordnet, wohingegen die Aufnahme 20 vor dem Eintreibelement 60 angeordnet ist. In Bezug auf die Setzachse A ist der Kondensator 300 also axial versetzt zu dem Eintreibelement 60 und radial überlappend mit dem Eintreibelement 60 angeordnet. Dadurch lässt sich einerseits eine geringe Länge der Entladeleitungen 210, 220 verwirklichen, wodurch sich deren Widerstände reduzieren und damit ein Wirkungsgrad des Antriebs erhöhen lässt. Andererseits lässt sich ein geringer Abstand eines Schwerpunkts des Setzgeräts 10 zur Setzachse A verwirklichen. Dadurch sind Kippmomente bei einem Rückstoss des Setzgeräts 10 während eines Eintreibvorgangs gering. Bei einem nicht gezeigten Ausführungsbeispiel ist der Kondensator um das Eintreibelement herum angeordnet.

Die Elektroden 310, 320 sind auf einander gegenüberliegenden Seiten an einer um eine Wickelachse aufgewickelten Trägerfolie 330 angeordnet, beispielsweise durch Metallisierung der Trägerfolie 330, insbesondere aufgedampft, wobei die Wickelachse mit der Setzachse A zusammenfällt. Bei nicht gezeigten Ausführungsbeispielen ist die Trägerfolie mit den Elektroden so um die Wickelachse gewickelt, dass ein Durchlass entlang der Wickelachse verbleibt. Insbesondere in diesem Fall ist der Kondensator beispielsweise um die Setzachse herum angeordnet. Die Trägerfolie 330 weist bei einer Ladespannung des Kondensators 300 von 1500 V eine Foliendicke zwischen 2,5 µm und 4,8 µm, bei einer Ladespannung des Kondensators 300 von 3000 V eine Foliendicke von beispielesweise 9,6 µm auf. Bei nicht gezeigten Ausführungsbeispielen ist die Trägerfolie ihrerseits aus zwei oder mehr übereinandergeschichteten Einzelfolien zusammengesetzt. Die Elektroden 310, 320 weisen einen Schichtwiderstand von 50 Ohm/□ auf.

Eine Oberfläche des Kondensators 300 hat die Form eines Zylinders, insbesondere Kreiszylinders, dessen Zylinderachse mit der Setzachse A zusammenfällt. Eine Höhe dieses Zylinders in Richtung der Wickelachse ist im Wesentlichen so gross wie sein senkrecht zur Wickelachse gemessener Durchmesser. Durch ein geringes Verhältnis von Höhe zu Durchmesser des Zylinders werden ein geringer Innenwiderstand bei relativ hoher Kapazität des Kondensators 300 und nicht zuletzt eine kompakte Bauweise des Setzgeräts 10 erreicht. Ein geringer Innenwiderstand des Kondensators 300 wird auch durch einen grossen Leitungsquerschnitt der Elektroden 310, 320 erreicht, insbesondere durch eine hohe Schichtdicke der Elektroden 310, 320, wobei die Auswirkungen der Schichtdicke auf einen Selbstheilungseffekt und/oder eine Lebensdauer des Kondensators 300 zu berücksichtigen sind.

Der Kondensator 300 ist mittels eines Dämpfelements 350 gedämpft an dem übrigen Setzgerät 10 gelagert. Das Dämpfelement 350 dämpft Bewegungen des Kondensators 300 relativ zum übrigen Setzgerät 10 entlang der Setzachse A. Das Dämpfelement 350 ist an der Stirnseite 360 des Kondensators 300 angeordnet und bedeckt die Stirnseite 360 vollständig. Dadurch werden die einzelnen Wicklungen der Trägerfolie 330 von einem Rückstoss des Setzgeräts 10 gleichmässig belastet. Die elektrischen Kontakte 370, 380 ragen dabei von der Stirnfläche 360 ab und durchdringen das Dämpfelement 350. Das Dämpfelement 350 weist zu diesem Zweck jeweils eine Freistellung auf, durch welche die elektrischen Kontakte 370, 380 hindurchragen. Die Verbindungsleitungen 301 weisen zum Ausgleich von Relativbewegungen zwischen dem Kondensator 300 und dem übrigen Setzgerät 10 jeweils eine nicht näher dargestellte Entlastungs- und/oder Dehnungsschlaufe auf. Bei nicht gezeigten Ausführungsbeispielen ist ein weiteres Dämpfelement an dem Kondensator angeordnet, beispielsweise an dessen von der Aufnahme abgewandten Stirnseite. Bevorzugt ist der Kondensator dann zwischen zwei Dämpfelementen eingespannt, dass heisst die Dämpfelemente liegen mit einer Vorspannung an dem Kondensator an. Bei weiteren nicht gezeigten Ausführungsbeispielen weisen die Verbindungsleitungen eine Steifigkeit auf, welche mit zunehmendem Abstand vom Kondensator kontinuierlich abnimmt.

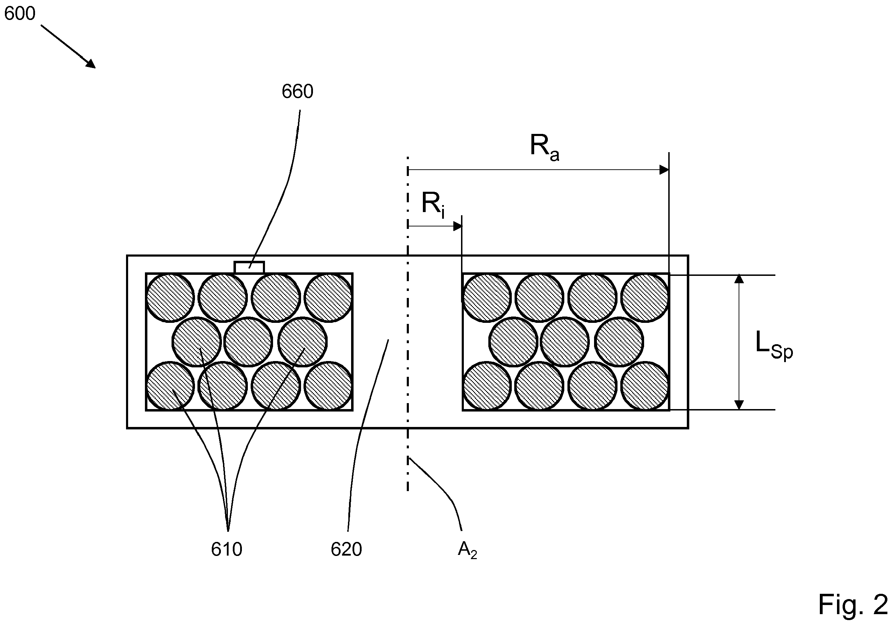

In Fig. 2 ist eine Erregerspule 600 in einem Längsschnitt dargestellt. Die Erregerspule 600 umfasst einen elektrischen Leiter, vorzugsweise aus Kupfer, mit einem beispielsweise kreisrunden Querschnitt, welcher in mehreren Windungen 610 um eine Setzachse $A_2$ gewunden ist. Insgesamt hat die Erregerspule eine im Wesentlichen zylindrische, insbesondere kreiszylindrische äussere Form mit einem Aussendurchmesser $R_a$ und einer Spulenlänge $L_{Sp}$ in Richtung der Setzachse $A_2$. In einem bezüglich der Setzachse $A_2$ radial inneren Bereich weist die Erregerspule 600 einen Freiraum 620 auf, welcher vorzugsweise ebenfalls zylindrisch, insbesondere kreiszylindrisch ist und einen Innendurchmesser $R_i$ der Erregerspule 600 definiert. Eine Eigeninduktivität der Spule ergibt sich damit zu

$$L_{Coil} = \mu_0 \, n_W^2 \, \frac{r_{Sp}^2 \pi}{L_{Sp} + 0.9 \, r_{Sp}}$$

mit der Induktionskonstanten $\mu_0 = 4\pi \cdot 10^{-7} \frac{V\,s}{A\,m}$, einer Anzahl $n_W$ der Windungen der Erregerspule 600 und einem mittleren Spulenradius $r_{Sp} = \frac{1}{2}\left(R_i + R_a\right)$. Da sich die Erregerspule 600 im Betrieb des Setzgeräts in einem magnetisch gesättigten Bereich befindet, ist die Permeabilitätszahl $\mu_r$ der Erregerspule 600 als $\mu_r=1$ anzusetzen, so dass sich die Eigeninduktivität aus der Anzahl der Windungen und den Abmessungen der Erregerspule 600 berechnen lässt.

An einer bezüglich der Setzachse $A_2$ axialen Stirnseite der Erregerspule 600 ist ein als Temperatursensor 660 ausgebildetes Mittel zur Erfassung einer Temperatur der Erregerspule 600 angeordnet und mit der Erregerspule 600 wärmeleitend verbunden, beispielsweise mittels einer Wärmeleitpaste. Bei nicht gezeigten Ausführungsbeispielen ist der Temperatursensor an einem Innenumfang oder Aussenumfang der Erregerspule angeordnet.

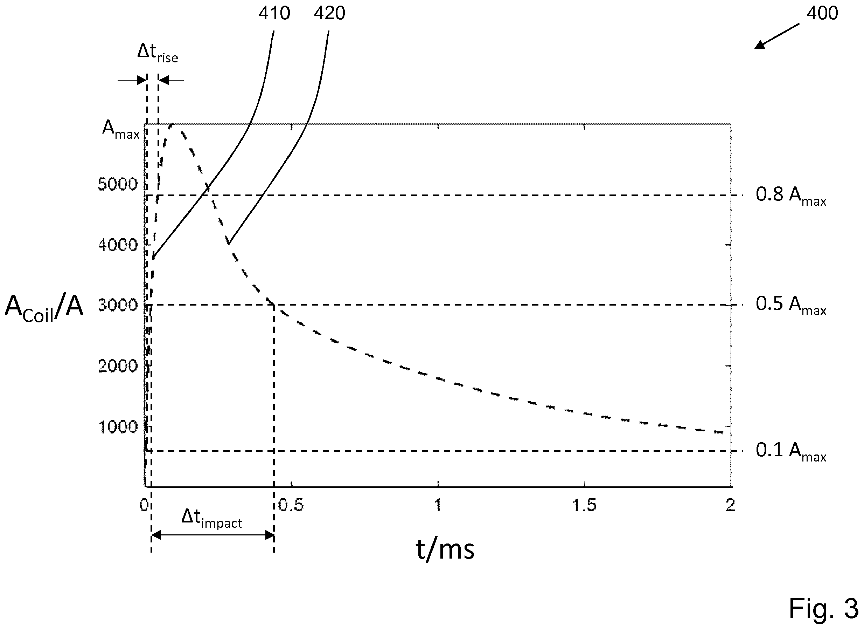

In Fig. 3 ist ein zeitlicher Verlauf 400 einer Stromstärke $A_{Coil}$ eines eine Erregerspule durchfliessenden Stroms während der Entladung eines Kondensators in einem erfindungsgemässen Setzgerät dargestellt. Die Stromstärke $A_{Coil}$ ist in Ampere angegeben und gegenüber einer Zeit t in Millisekunden aufgetragen. Der zeitliche Verlauf 400 der Stromstärke $A_{Coil}$ weist eine ansteigende Flanke 410, eine maximale Stromstärke $A_{max}$ von etwa 6000 A und eine abfallende Flanke 420 auf. Innerhalb der ansteigenden Flanke 410 steigt die Stromstärke $A_{Coil}$ während einer Stromanstiegsdauer $\Delta t_{rise}$ von dem 0,1-fachen bis zu dem 0,8-fachen der maximalen Stromstärke $A_{max}$ an. Während einer Einwirkdauer $\Delta t_{impact}$ beträgt die Stromstärke $A_{Coil}$ mehr als das 0,5-fache der maximalen Stromstärke $A_{max}$.

Im vorliegenden Ausführungsbeispiel beträgt die Stromanstiegsdauer $\Delta t_{rise}$ etwa 0,05 ms und die Ein-

wirkdauer $\Delta t_{impact}$ etwa 0,4 ms. Wenn die Stromanstiegsdauer $\Delta t_{rise}$ und die Einwirkdauer $\Delta t_{impact}$ zu klein gewählt sind, muss die maximale Stromstärke $A_{max}$ erhöht werden, um die gleiche Setzenergie zu gewährleisten. Dies erhöht jedoch eine thermische Belastung der Erregerspule und damit eine Absenkung des Wirkungsgrads des Antriebs. Wenn die Stromanstiegsdauer $\Delta t_{rise}$ und die Einwirkdauer $\Delta t_{impact}$ zu gross gewählt sind, bewegt sich das Eintreibelement bereits in der ansteigenden Flanke 410 so weit von der Erregerspule weg, dass die auf den Kurzschlussläufer wirkende Abstossungskraft reduziert ist, was ebenfalls den Wirkungsgrad des Antriebs absenkt.

Bei einer Querschnittsfläche der Erregerspule von beispielsweise 3 mm$^2$ beträgt eine maximale Stromdichte in der Erregerspule während der Entladung des Kondensators etwa 2000 A/mm$^2$. Wenn die maximale Stromdichte in der Erregerspule zu klein gewählt ist, verringert sich bei sonst unverändertem Setzgerät die erreichbare Setzenergie. Um dies auszugleichen, ist beispielsweise der Kondensator oder die Erregerspule zu vergössern, was allerding ein Gewicht des Setzgeräts erhöhen würde. Wenn die maximale Stromdichte in der Erregerspule zu gross gewählt ist, erhöht sich eine thermische Belastung der Erregerspule, mit der Folge einer Absenkung des Wirkungsgrads des Antriebs.

Der Kondensator und die Erregerspule sind in einem elektrischen Schwingkreis mit einem Gesamtwiderstand $R_{total}$ angeordnet. Der Kondensator weist eine Kapazität $C_{Cap}$ sowie einen Kondensatorwiderstand $R_{Cap}$ auf. Die Erregerspule weist eine Eigeninduktivität $L_{Coil}$ sowie einen Spulenwiderstand $R_{Coil}$ auf. Ein Verhältnis des Kondensatorwiderstands $R_{Cap}$ zu dem Gesamtwiderstand $R_{total}$ beträgt 0,14. Wenn das Verhältnis des Kondensatorwiderstands $R_{Cap}$ zu dem Gesamtwiderstand $R_{total}$ zu gross gewählt ist, fällt relativ viel Verlustwärme in dem Kondensator an, wodurch sich der Wirkungsgrad des Antriebs verringert.

Eine Spulenzeitkonstante $\tau_{Coil}$ der Erregerspule ergibt sich aus einem Verhältnis der Eigeninduktivität $L_{Coil}$ zu dem Spulenwiderstand $\tau_{Coil}$ und beträgt beispielsweise 1000 μH/Ω oder 1 ms. Ist die Spulenzeitkonstante $\tau_{Coil}$ zu klein gewählt, steigt ein Stromfluss in der Erregerspule zu schnell an, wodurch der Wirkungsgrad des Antriebs verringert ist. Ist die Spulenzeitkonstante $\tau_{Coil}$ zu gross gewählt, verteilt sich der Stromfluss durch die Erregerspule über einen relativ grossen Zeitraum. Es resultiert eine reduzierte maximale Stromstärke $A_{max}$, wodurch der Wirkungsgrad des Antriebs verringert ist.

Ausserdem weist der Kondensator eine Kondensatorzeitkonstante $\tau_{Cap} = C_{Cap} R_{Cap}$ und die Erregerspule eine Spulenzeitkonstante $\tau_{Coil} = L_{Coil}/R_{Coil}$ auf, wobei ein Verhältnis der Spulenzeitkonstante $\tau_{Coil}$ zu der Kondensatorzeitkonstante $\tau_{Cap}$ etwa 150 beträgt. Ist das Verhältnis der Zeitkonstanten zu klein gewählt, fällt relativ viel Verlustwärme in dem Kondensator an, wodurch der Wirkungsgrad des Antriebs verringert ist.

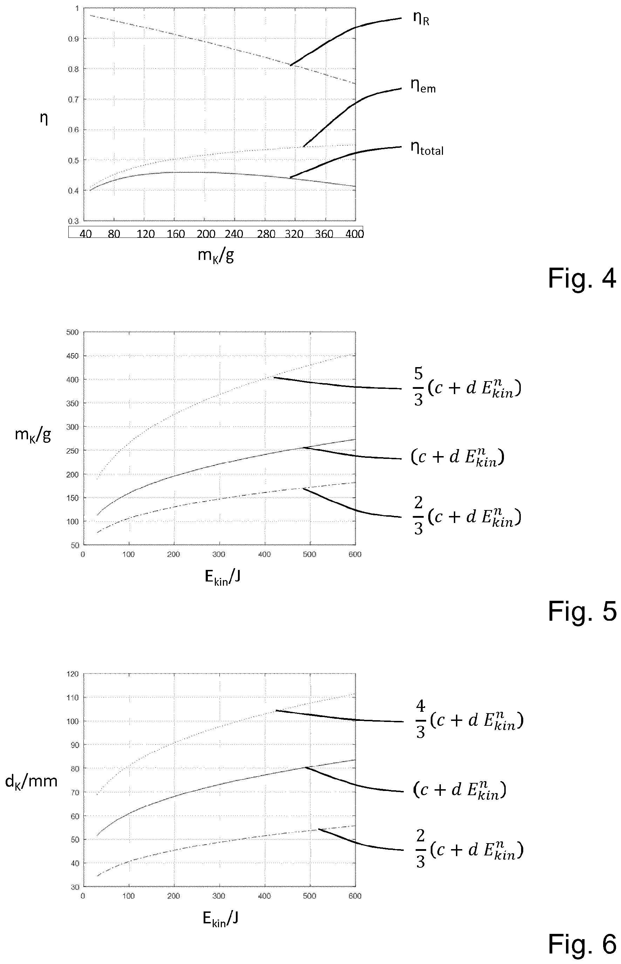

In Fig. 4 ist ein Wirkungsgrad n eines Antriebs eines Setzgeräts in Abhängigkeit einer Kolbenmasse $m_K$ eines Eintreibelements bei einer Setzenergie $E_{kin}$ von 125 J aufgetragen. Der Wirkungsgrad n hat keine Einheit, die Kolbenmasse $m_K$ ist in Gramm angegeben. Ein Gesamtwirkungsgrad $\eta_{total}$ des Antriebs ergibt sich aus einem Produkt von einem Rückstoss-Wirkungsgrad $\eta_R$ und einem elektromagnetischen Wirkungsgrad $\eta_{em}$. Der Rückstoss-Wirkungsgrad $\eta_R$ nimmt mit zunehmender Kolbenmasse $m_K$ ab, da bei gleicher Setzenergie $E_{kin}$ eine Energie eines Rückstosses des Setzgeräts mit zunehmender Kolbenmasse $m_K$ zunimmt und diese Rückstossenergie verloren ist. Der elektromagnetische Wirkungsgrad $\eta_{em}$ nimmt mit zunehmender Kolbenmasse $m_K$ zu, da bei gleicher Setzenergie $E_{kin}$ eine Beschleunigung des Eintreibelements mit zunehmender Kolbenmasse $m_K$ abnimmt und damit eine Verweildauer des Eintreibelements im Einflussbereich der Erregerspule zunimmt. Die Kolbenmasse $m_K$, bei welcher der Gesamtwirkungsgrad $\eta_{total}$ des Antriebs maximal ist, lässt sich bestimmen zu

$$m_K = (c + d\, E_{kin}^n)$$

mit c = 20 g, d = 30 gJ$^{-n}$ sowie n = 1/3. Im vorliegenden Beispiel ($E_{kin}$ = 125 J) beträgt die Kolbenmasse $m_K$ = 170 g.

In Fig. 5 ist der oben beschriebene Zusammenhang der Kolbenmasse $m_K$ mit der Setzenergie $E_{kin}$ dargestellt. Wie im Zusammenhang mit Fig. 4 beschrieben, nimmt der Gesamtwirkungsgrad $\eta_{total}$ des Antriebs ausserhalb des erfindungsgemässen Bereichs

$$\frac{2}{3}(c + d\, E_{kin}^n) \leq m_K \leq \frac{5}{3}(c + d\, E_{kin}^n)$$

signifikant ab.

Analog zu Fig. 4 nimmt der Rückstoss-Wirkungsgrad $\eta_R$ auch mit zunehmendem Kolbendurchmesser $d_K$ ab, da mit zunehmendem Kolbendurchmesser $d_K$ die Kolbenmasse $m_K$ zunimmt. Weiterhin nimmt der elektromagnetische Wirkungsgrad $\eta_{em}$ mit zunehmendem Kolbendurchmesser $d_K$ zu, da mit zunehmendem Kolbendurchmesser $d_K$ ein Durchmesser des Kurzschlussläufers zunimmt, so dass auch eine Abstossungskraft zwischen der Erregerspule und dem Kurzschlussläufer zunimmt. Der Kolbendurchmesser $d_K$, bei welchem der Gesamtwirkungsgrad $\eta_{total}$ des Antriebs bei gegebener Setzenergie $E_{kin}$ maximal ist, lässt sich bestimmen zu

$$d_K = (a + b\, E_{kin}^n)$$

mit a = 33 mm, b = 6 mmJ$^{-n}$ sowie n = 1/3. Im vorliegenden Beispiel ($E_{kin}$ = 125 J) beträgt die der Kolbendurchmesser $d_K$ = 63 mm.

In Fig. 6 ist der oben beschriebene Zusammenhang des Kolbendurchmessers $d_K$ mit der Setzenergie $E_{kin}$ dargestellt. Wie oben beschrieben, nimmt der Gesamtwirkungsgrad $\eta_{total}$ des Antriebs ausserhalb des erfindungsgemässen Bereichs

$$\frac{2}{3}(a + b\,E_{kin}^n) \leq d_K \leq \frac{4}{3}(a + b\,E_{kin}^n)$$

signifikant ab.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Setzgerät auch für andere Anwendungen einsetzbar ist.

**Patentansprüche**

1. Setzgerät zum Eintreiben von Befestigungselementen in einen Untergrund, insbesondere handgeführtes Setzgerät, aufweisend eine Aufnahme, welche dafür vorgesehen ist, ein Befestigungselement aufzunehmen, ein Eintreibelement, welches dafür vorgesehen ist, ein in der Aufnahme aufgenommenes Befestigungselement mit einer Setzenergie $E_{kin}$ entlang einer Setzachse in den Untergrund zu befördern, einen Antrieb, welcher dafür vorgesehen ist, das Eintreibelement entlang der Setzachse auf das Befestigungselement zu anzutreiben, wobei der Antrieb einen elektrischen Kondensator, einen an dem Eintreibelement angeordneten Kurzschlussläufer und eine Erregerspule aufweist, welche bei einer Entladung des Kondensators mit Strom durchflossen wird und ein Magnetfeld erzeugt, welches das Eintreibelement auf das Befestigungselement zu beschleunigt, wobei eine Stromstärke $A_{Coil}$ des die Erregerspule durchfliessenden Stroms während der Entladung des Kondensators einen zeitlichen Verlauf mit einer ansteigenden Flanke, einer maximalen Stromstärke $A_{max}$ und einer abfallenden Flanke aufweist, wobei die Stromstärke $A_{Coil}$ während einer Stromanstiegsdauer $\Delta t_{rise}$ von dem 0,1-fachen bis zu dem 0,8-fachen der maximalen Stromstärke $A_{max}$ ansteigt und während einer Einwirkdauer $\Delta t_{impact}$ mehr als das 0,5-fache der maximalen Stromstärke $A_{max}$ beträgt, und wobei die Stromanstiegsdauer $\Delta t_{rise}$ mindestens 0,020 ms und höchstens 0,275 ms und/oder die Einwirkdauer $\Delta t_{impact}$ mindestens 0,15 ms und höchstens 2,0 ms beträgt.

2. Setzgerät nach Anspruch 1, wobei die Stromanstiegsdauer $\Delta t_{rise}$ mindestens 0,05 ms und höchstens 0,2 ms und/oder die Einwirkdauer $\Delta t_{impact}$ mindestens 0,2 ms und höchstens 1,6 ms beträgt.

3. Setzgerät nach einem der vorhergehenden Ansprüche, wobei eine maximale Stromdichte in der Erregerspule während der Entladung des Kondensators mindestens 800 A/mm$^2$ und höchstens 3200 A/mm$^2$ beträgt.

4. Setzgerät nach einem der vorhergehenden Ansprüche, wobei der Kondensator und die Erregerspule in einem elektrischen Schwingkreis angeordnet sind, und wobei der Kondensator eine Kapazität $C_{Cap}$ sowie einen Kondensatorwiderstand $R_{Cap}$, die Erregerspule eine Eigeninduktivität $L_{Coil}$ sowie einen Spulenwiderstand $R_{Coil}$ und der elektrische Schwingkreis einen Gesamtwiderstand $R_{total}$ aufweist.

5. Setzgerät nach Anspruch 4, wobei ein Verhältnis des Kondensatorwiderstands $R_{Cap}$ zu dem Gesamtwiderstand $R_{total}$ höchstens 0,6, insbesondere höchstens 0,5 beträgt.

6. Setzgerät nach einem der Ansprüche 4 bis 5, wobei ein Verhältnis der Eigeninduktivität $L_{Coil}$ zu dem Spulenwiderstand $R_{Coil}$ mindestens 800 $\mu$H/$\Omega$ und höchstens 4800 $\mu$H/$\Omega$ beträgt.

7. Setzgerät nach einem der Ansprüche 4 bis 6, wobei der Kondensator eine Kondensatorzeitkonstante $\tau_{Cap} = C_{Cap}\,R_{Cap}$ und die Erregerspule eine Spulenzeitkonstante $\tau_{Coil} = L_{Coil}/R_{Coil}$ aufweist, und wobei ein Verhältnis der Spulenzeitkonstante $\tau_{Coil}$ zu der Kondensatorzeitkonstante $\tau_{Cap}$ mindestens 10 beträgt.

8. Setzgerät nach einem der vorhergehenden Ansprüche, wobei das Eintreibelement dafür vorgesehen ist, ein in der Aufnahme aufgenommenes Befestigungselement mit einer Setzenergie $E_{kin}$ von mindestens 30 J und höchstens 600 J in den Untergrund zu befördern, wobei das Eintreibelement einen Kolbendurchmesser $d_K$ und eine Kolbenmasse $m_K$ aufweist, und wobei für den Kolbendurchmesser $d_K$

$$\frac{2}{3}(a + b\,E_{kin}^n) \leq d_K \leq \frac{4}{3}(a + b\,E_{kin}^n)$$

mit a = 33 mm, b = 6 mmJ$^{-n}$ sowie n = 1/3 und/oder für die Kolbenmasse $m_K$

$$\frac{2}{3}(c + d\,E_{kin}^n) \leq m_K \leq \frac{5}{3}(c + d\,E_{kin}^n)$$

mit $c = 20$ g, $d = 30$ gJ$^{-n}$ sowie $n = 1/3$ gilt.

Fig. 1

Fig. 2

Fig. 3

Fig. 4

$$\frac{5}{3}(c + d\, E_{kin}^n)$$

$$(c + d\, E_{kin}^n)$$

$$\frac{2}{3}(c + d\, E_{kin}^n)$$

Fig. 5

$$\frac{4}{3}(c + d\, E_{kin}^n)$$

$$(c + d\, E_{kin}^n)$$

$$\frac{2}{3}(c + d\, E_{kin}^n)$$

Fig. 6

**Europäisches Patentamt**
**European Patent Office**
**Office européen des brevets**

## EUROPÄISCHER RECHERCHENBERICHT

**Nummer der Anmeldung**

EP 18 17 6198

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2003/183670 A1 (BARBER JOHN P [US] ET AL) 2. Oktober 2003 (2003-10-02) * Abbildungen 1, 4 * * Absätze [0014], [0029] * ----- | 1-8 | INV. B25C1/06 |
| A | EP 0 829 329 A1 (HEWLETT PACKARD CO [US]) 18. März 1998 (1998-03-18) * Abbildung 3 * * Spalte 1, Zeile 5 - Zeile 8 * * Spalte 8, Zeile 14 - Zeile 47 * ----- | 1-8 | |

**RECHERCHIERTE SACHGEBIETE (IPC)**

B25C

Der vorliegende Recherchenbericht wurde für alle Patentansprüche erstellt

| Recherchenort | Abschlußdatum der Recherche | Prüfer |
|---|---|---|
| Den Haag | 9. Januar 2019 | D'Andrea, Angela |

**ANHANG ZUM EUROPÄISCHEN RECHERCHENBERICHT
ÜBER DIE EUROPÄISCHE PATENTANMELDUNG NR.**

EP 18 17 6198

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2019

| Im Recherchenbericht angeführtes Patentdokument | Datum der Veröffentlichung | Mitglied(er) der Patentfamilie | Datum der Veröffentlichung |
|---|---|---|---|
| US 2003183670 A1 | 02-10-2003 | AU 8530101 A<br>CA 2420365 A1<br>EP 1324861 A1<br>JP 2004510590 A<br>TW 516995 B<br>US 2003183670 A1<br>WO 0216085 A1 | 04-03-2002<br>28-02-2002<br>09-07-2003<br>08-04-2004<br>11-01-2003<br>02-10-2003<br>28-02-2002 |
| EP 0829329 A1 | 18-03-1998 | EP 0829329 A1<br>JP H10120285 A | 18-03-1998<br>12-05-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6830173 B2